# EUROPÄISCHE PATENTSCHRIFT

(11) **EP 2 405 126 B1**
(45) Veröffentlichungstag und Bekanntmachung des Hinweises auf die Patenterteilung: **03.04.2013**
(21) Anmeldenummer: 10007084.6
(22) Anmeldetag: 09.07.2010
(51) Int. Cl.: F02M 61/14, F02M 63/00

(54) **Entkopplungselement mit Dichtfunktion**
Decoupling element with sealing function
Elément de découplage doté d'une fonction d'étanchéité

(43) Veröffentlichungstag der Anmeldung: 11.01.2012
(73) Patentinhaber: Stop-Choc Schwingungstechnik GmbH & Co. KG, 71272 Renningen (DE)
(72) Erfinder: Grantcolar, Frederic, 71277 Rutesheim (DE); Walz, Marco, 71083 Herrenberg (DE); Schmoll, Eduard, 71711 Steinheim (DE)
(74) Vertreter: Schmid, Rudolf

(56) Entgegenhaltungen:
- EP-A1- 2 166 219
- DE-A1-102006 009 094
- DE-A1-102008 039 722
- US-A1- 2004 040 543

## Beschreibung

Die Erfindung betrifft ein Entkopplungselement mit Dichtfunktion für einen Kraftstoffinjektor, insbesondere einen Benzin- oder Diesel-Kraftstoffinjektor, in einer Führungsbohrung eines Zylinderkopfs einer Brennkraftmaschine.

Die DE 10 2008 048 173 A1 offenbart ein Entkopplungselement für einen Kraftstoffinjektor in einer Führungsbohrung eines Zylinderkopfs einer Brennkraftmaschine mit einem zur koaxialen Anlage in der Führungsbohrung und am Kraftstoffinjektor vorgesehenen vorzugsweise ringförmigen Ganzmetallkissen und zwei jeweils schalen- und ringförmigen Gehäuseteilen, zwischen denen das Metallkissen eingefasst ist. Eine ringförmige Dichtung ist koaxial zur Führungsbohrung vorgesehen und ist in das Metallkissen integriert oder an mindestens einer der schalen- und ringförmigen Gehäuseteile befestigt. Als nachteilig bei diesem Entkopplungselement des Standes der Technik haben sich die Teilevielfalt, der daraus resultierende Lagerhaltungsaufwand und fehlerhafte Einbaumöglichkeiten herausgestellt.

Aufgabe der Erfindung ist es, ein Entkopplungselement mit Dichtfunktion für einen Kraftstoffinjektor in einer Führungsbohrung zu schaffen, das nicht die Nachteile des Standes der Technik hat.

Die Lösung erfolgt mit einem Entkopplungselement mit Dichtfunktion für einen Kraftstoffinjektor mit den Merkmalen des Anspruchs 1. Vorteilhafte Ausgestaltungen der Erfindung sind in den Unteransprüchen dargestellt.

Gemäß der Erfindung weist ein Entkopplungselement mit Dichtfunktion einen Kraftstoffinjektor auf, insbesondere einen Benzin- oder Diesel-Kraftstoffinjektor, der koaxial in einer Führungsbohrung eines Zylinderkopfs einer Brennkraftmaschine gehalten ist und mit einem zur Führungsbohrung und zum Kraftstoffinjektor koaxialen ringförmigen Metallkissen versehen ist. Das Metallkissen ist zwischen zwei jeweils schalen- und ringförmige Gehäuseteile eingefasst und eine zur Führungsbohrung koaxiale, ringförmige Dichtung beliebiger Querschnittsgeometrie ist an den zwei jeweils schalen- und ringförmigen Gehäuseteilen vorgesehen, wobei die ringförmige Dichtung an Außendurchmessern der beiden schalen- und ringförmigen Gehäuseteile anliegt und symmetrisch zu diesen schalen- und ringförmigen Gehäuseteilen angeordnet ist. Die symmetrische Anordnung der vorzugsweise aus Elastomer oder Kunststoff hergestellten Dichtung an den Außendurchmessern der beiden z. B. vorzugsweise aus Blech oder Kunststoff gefertigten schalen- und ringförmigen Gehäuseteile, welche das vorzugsweise ganz aus Metall gefertigte Metallkissen umfassen, schließen die Möglichkeit für Falschverbau zuverlässig aus oder schränken diese zumindest weitgehend ein. Die Anordnung der schalen- und ringförmigen Gehäuseteile mit Metallkissen zwischen Dichtung und Kraftstoffinjektor ermöglicht Dichtungen mit relativ größeren Außenflächen und damit geringeren flächenbezogener Belastung bei gleichen anliegenden Kräften als es Dichtungen zwischen Metallkissen und Kraftstoffinjektor bieten können, vorteilhaften Einbau und reduzierten Verschleiß der Dichtung bei bestmöglichen Dämpfungswerten für das erfinderische Entkopplungselement.

Gemäß einer bevorzugten Ausgestaltung der Erfindung sind die schalen- und ringförmigen Gehäuseteile symmetrisch zum Metallkissen und damit untereinander austauschbar, wodurch die Möglichkeiten für Falschverbau dieser Gehäuseteile und des erfinderischen Entkopplungselements insgesamt zuverlässig ausgeschlossen oder zumindest weitgehend eingeschränkt sind. Die Symmetrie der schalen- und ringförmigen Gehäuseteile führt zu geringerer Anzahl unterschiedlicher Teile für das erfinderische Entkopplungselement mit Vorteilen für die Lagerhaltung und reduzierten Herstellkosten für erhöhte Stückzahlen identischer schalen- und ringförmiger Gehäuseteile. Die Symmetrie der schalen- und ringförmigen Gehäuseteile erlaubt ein Metallkissen freier Einbaurichtung, wodurch auch die Möglichkeiten für Falschverbau des Metallkissens des erfinderischen Entkopplungselements insgesamt zuverlässig ausgeschlossen sind.

Gemäß einer weiteren bevorzugten Ausgestaltung der Erfindung liegt der Kraftstoff-Injektor an der ringförmigen Dichtung koaxial zur Führungsbohrung auf.

Gemäß einer weiteren bevorzugten Ausgestaltung der Erfindung liegt der Zylinderkopf an der ringförmigen Dichtung eventuell teilweise koaxial zur Führungsbohrung auf.

Gemäß einer weiteren bevorzugten Ausgestaltung der Erfindung ist die ringförmige Dichtung mit einer kuppen- oder doppellippenförmigen oder sich aus einer anderen Querschnittsgeometrie ergebenden Dichtung radial an eine Wand des Zylinderkopfs angepresst.

Gemäß einer weiteren bevorzugten Ausgestaltung der Erfindung liegt der Injektor auf einem Obenring des schalen- und ringförmigen Gehäuseteils auf.

Gemäß einer weiteren bevorzugten Ausgestaltung der Erfindung liegt ein Untenring des schalen- und ringförmigen Gehäuseteils auf dem Zylinderkopf auf.

Gemäß einer weiteren bevorzugten Ausgestaltung der Erfindung ist zumindest eines der schalen- und ringförmigen Gehäuseteile zumindest teilweise beschichtet für zusätzliche Dichtfunktion an den bis zu vier jeweiligen Anlagebereichen der schalen- und ringförmigen Gehäuseteile an Kraftstoffinjektor und/oder metallischem Zylinderkopf.

Gemäß einer weiteren bevorzugten Ausgestaltung der Erfindung liegen die schalen- und ringförmigen Gehäuseteile an ihren radial innenliegenden Enden jeweils am Kraftstoffinjektor an. Die Anlageenden können in eine Aussparung am Umfang des Kraftstoffinjektors eingreifen, so dass bei Demontage des Kraftstoffinjektors das Entkopplungselement insgesamt mit entnommen wird.

Gemäß einer weiteren bevorzugten Ausgestaltung der Erfindung sind die schalen- und ringförmigen Gehäuseteile mit ihren jeweils radial innenliegenden Enden völlig frei vom Kraftstoffinjektor, um Schwingungsbrücken zu vermeiden.

Die Erfindung wird im Folgenden anhand bevorzugter Ausführungsbeispiele dargestellt. Es zeigen:
Fig. 1: einen Querschnitt durch ein Entkopplungselement für einen Kraftstoffinjektor gemäß einer ersten Ausgestaltung der Erfindung, und
Fig. 2: einen Querschnitt durch ein Entkopplungselement für einen Kraftstoffinjektor gemäß einer zweiten Ausgestaltung der Erfindung.

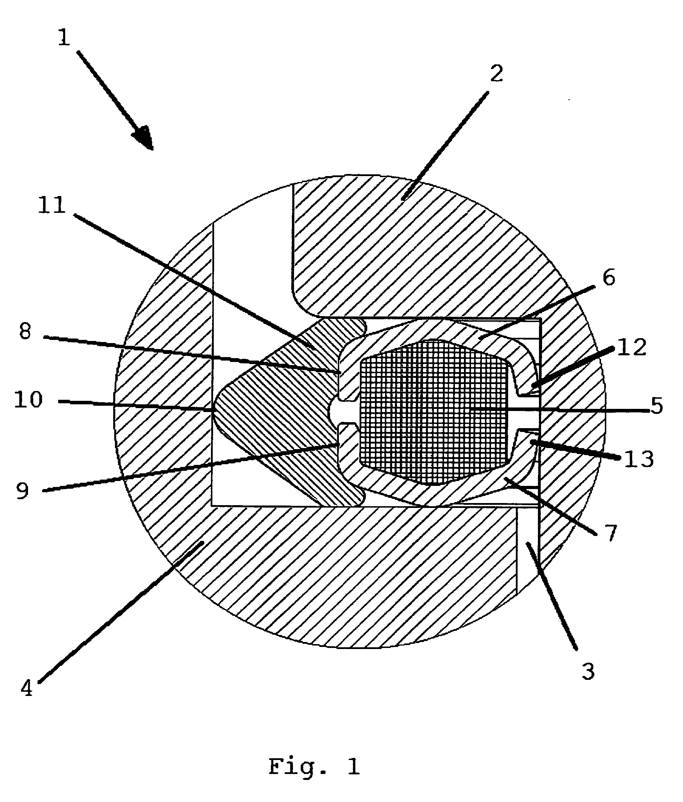

Fig. 1: Das Entkopplungselement 1 mit Dichtfunktion zum Entkoppeln und Abdichten eines Kraftstoffinjektors 2 in einer Führungsbohrung 3 eines metallischen Zylinderkopfs 4 einer Brennkraftmaschine (nicht dargestellt), insbesondere eines Benzin- oder Dieselmotors, weist ein ringförmiges Ganzmetallkissen 5 auf, das im wesentlichen koaxial zum Kraftstoffinjektor 2 in zwei koaxiale, jeweils schalen- und ringförmige Gehäuseteile 6, 7 aus Metall, insbesondere Blech oder Kunststoff eingefasst ist. Die ringförmigen Gehäuseteile sind vorzugsweise zumindest an ihren Anlagebereichen an Zylinderkopf 4 und Kraftstoffinjektor 2 für zusätzliche Dichtwirkung beschichtet mit Kunststoff, vorzugsweise Teflon mit einer Dicke von 5-10 p, und symmetrisch je als baugleiche Oben- oder Untenringe 6, 7 ausgebildet, wobei der Obenring 6 auf dem Ganzmetallkissen 5 auf- und oben und zudem radial innen an einem Anlageende 12 an dem Kraftstoffinjektor 2 anliegt. Der Untenring 7 liegt auf dem Zylinderkopf 4 auf und zudem radial innen an einem Anlageende 13 am Kraftstoffinjektor 2 an. Die schalen- und ringförmigen Gehäuseteile 6, 7 umfassen symmetrisch das ringförmige Ganzmetallkissen 5 mit einem zentrisch symmetrischen, polygonen Querschnitt.

An radial nach außen, d. h. vom Kraftstoffinjektor 2 weg- und zum Zylinderkopf 4 hinweisenden Außendurchmessern 8, 9 der ringförmigen Gehäuseteile 6, 7 ist eine symmetrische Dichtung 11 aus Elastomer oder Kunststoff mittels Einpressen befestigt, so dass die Dichtung 11 mit sich aus der Querschnittsgeometrie ergebender Form an eine Wandung des Zylinderkopfs 4 angepresst ist. Der Kraftstoffinjektor 2 liegt auf der Dichtung 11 auf und die Dichtung 11 liegt wiederum auf dem Zylinderkopf 4 auf.

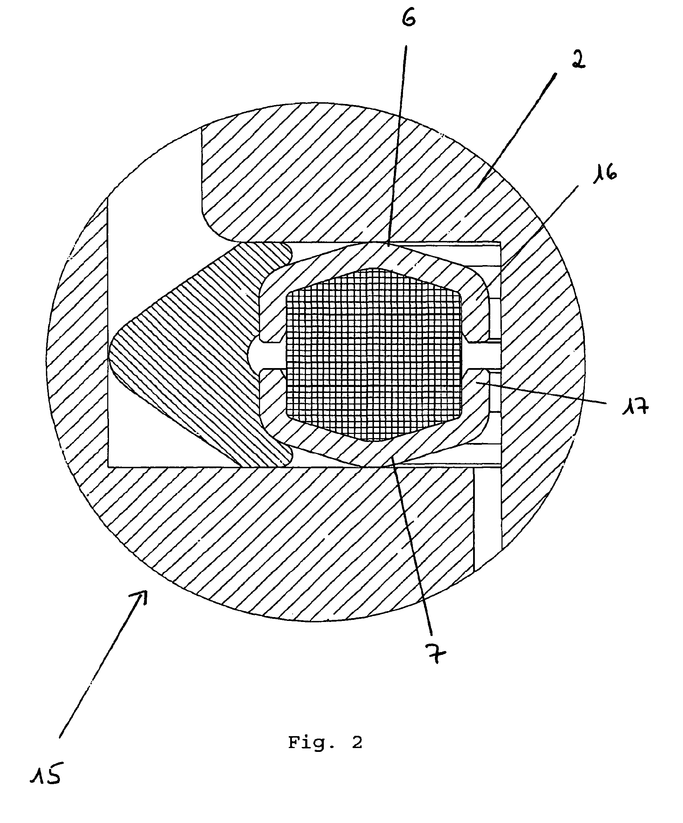

Fig. 2: Entsprechende Merkmale sind mit den Bezugszeichen aus Fig. 1 bezeichnet. Das alternative Entkopplungselement 15 entspricht dem Entkopplungselement 1 aus Fig. 1 bis auf die innen liegenden Enden 16, 17 der schalen- und ringförmige Gehäuseteile 6, 7 aus Metall, die vom Kraftstoffinjektor 2 beide jeweils frei sind.

## Patentansprüche

1. Entkopplungselement (1) mit Dichtfunktion für einen Kraftstoffinjektor (2), insbesondere einen Benzin- oder Diesel-Kraftstoffinjektor, in einer Führungsbohrung (3) eines Zylinderkopfs (4) einer Brennkraftmaschine mit einem koaxial zur Führungsbohrung (3) und zum Kraftstoffinjektor (2) vorgesehenen, ringförmigen Metallkissen (5), zwei jeweils schalen- und ringförmigen Gehäuseteilen (6, 7), zwischen denen das Metallkissen (5) eingefasst ist und einer zur Führungsbohrung (3) koaxialen, ringförmigen Dichtung (11), **dadurch gekennzeichnet, dass** die ringförmige Dichtung (11) an Außendurchmessern (8, 9) der beiden schalen- und ringförmigen Gehäuseteile (6, 7) und symmetrisch zu diesen schalen- und ringförmigen Gehäuseteilen (6, 7) angeordnet ist.

2. Entkopplungselement (1) gemäß Anspruch 1, **dadurch gekennzeichnet, dass** die schalen- und ringförmigen Gehäuseteile (6, 7) symmetrisch zum Metallkissen (5) sind.

3. Entkopplungselement (1) gemäß Anspruch 1, **dadurch gekennzeichnet, dass** die ringförmige Dichtung (11) aus Elastomer oder Kunststoff ist.

4. Entkopplungselement (1) gemäß Anspruch 1, **dadurch gekennzeichnet, dass** die schalen- und ringförmigen Gehäuseteile (6, 7) aus Blech oder Kunststoff sind.

5. Entkopplungselement (1) gemäß Anspruch 1, **dadurch gekennzeichnet, dass** der Kraftstoff-Injektor (2) an der ringförmigen Dichtung (11) koaxial zur Führungsbohrung (3) aufliegt.

6. Entkopplungselement (1) gemäß Anspruch 1, **dadurch gekennzeichnet, dass** der Zylinderkopf (4) an der ringförmigen Dichtung (11) koaxial zur Führungsbohrung (3) aufliegt.

7. Entkopplungselement (1) gemäß Anspruch 1, **dadurch gekennzeichnet, dass** die ringförmige Dichtung (11) radial gegen eine Wand des Zylinderkopfs (4) gepresst ist.

8. Entkopplungselement (1) gemäß Anspruch 1, **dadurch gekennzeichnet, dass** der Injektor auf dem Obenring (6) der schalen- und ringförmigen Gehäuseteile (6, 7) aufliegt.

9. Entkopplungselement (1) gemäß Anspruch 1, **dadurch gekennzeichnet, dass** der Untenring (7) der schalen- und ringförmigen Gehäuseteile (6, 7) auf dem Zylinderkopf (4) aufliegt.

10. Entkopplungselement (1) gemäß Anspruch 4, **dadurch gekennzeichnet, dass** zumindest eines der schalen- und ringförmigen Gehäuseteile (6, 7) zumindest teilweise beschichtet ist.

11. Entkopplungselement (1) gemäß Anspruch 1, **dadurch gekennzeichnet, dass** von den schalen- und ringförmigen Gehäuseteilen (6, 7) der Obenring (6) an einem radial innenliegenden Ende (12) und der Untenring (7) an einem radial innenliegenden Ende (13) am Kraftstoffinjektor (2) anliegen.

12. Entkopplungselement (15) gemäß Anspruch 1, **dadurch gekennzeichnet, dass** von den schalen- und ringförmigen Gehäuseteilen (6, 7) der Obenring (6) mit dem radial innenliegenden Ende (16) und der Untenring (7) mit dem radial innenliegenden Ende (17) frei sind vom Kraftstoffinjektor (2).

## Claims

1. Decoupling (1) element with sealing function for a fuel injector (2), particularly a petrol or diesel injector, in a guidance hole (3) of a cylinder head (4) of a combustion engine, with an annular metal cushion (5), provided coaxially with regard to the guidance hole (3) and the fuel injector (2), two respectively shell type and annular type casing elements (6, 7), encompassing the metal cushion (5) in between and an annular sealing (11) coaxial with regard to the guidance hole (3), **characterized in that** the annular sealing (11) is arranged at peripheral diameters (8, 9) of both shell type and annular type casing elements (6, 7) and symmetric with regard to said shell type and annular type casing elements (6, 7).

2. Decoupling (1) element according to claim 1, **characterized in that** the shell type and annular type casing elements (6, 7) are symmetric with regard to the metal cushion (5).

3. Decoupling (1) element according to claim 1, **characterized in that** the annular sealing (11) is made of elastomers or plastics.

4. Decoupling (1) element according to claim 1, **characterized in that** the shell type and annular type casing elements (6, 7) are made of metal sheet or plastics.

5. Decoupling (1) element according to claim 1, **characterized in that** the fuel injector (2) bears on the annular sealing (11) coaxial with regard to the guidance hole (3).

6. Decoupling (1) element according to claim 1, **characterized in that** the cylinder head (4) bears on the annular sealing (11) coaxial with regard to the guidance hole (3).

7. Decoupling (1) element according to claim 1, **characterized in that** the annular sealing (11) is biased radial against a wall of the cylinder head (4).

8. Decoupling (1) element according to claim 1, **characterized in that** the injector bears on the top ring (6) of the shell type and annular type casing elements (6, 7).

9. Decoupling (1) element according to claim 1, **characterized in that** the lower ring (7) of the shell type and annular type casing elements (6, 7) bears on the cylinder head (4).

10. Decoupling (1) element according to claim 4, **characterized in that** at least one of the shell type and annular type casing elements (6, 7) is at least partly coated.

11. Decoupling (1) element according to claim 1, **characterized in that** the top ring (6) of the shell type and annular type casing elements (6, 7) bears on a radial inner end (12) and the lower ring (7) on a radial inner end (13) of the fuel injector (2).

12. Decoupling (1) element according to claim 1, **characterized in that** the top ring (6) of the shell type and annular type casing elements (6, 7) with a radial inner end (16) and the lower ring (7) with a radial inner end (17) are free from the fuel injector (2).

## Revendications

1. Elément de découplage (1) doté d'une fonction d'étanchéité pour un injecteur de carburant (2), particulièrement d'un injecteur d'essence ou de diesel, dans un alésage de guidage (3) d'une culasse (4) d'un moteur à combustion, avec un coussin métallique (5) annulair prévu coaxial rélatif à l'alésage de guidage (3) et à l'injecteur de carburant (2), deux éléments de cloison (6, 7) du type coquille et annulaire parmi lesquels est encadré le coussin métallique (5) et d'un joint annulair (11) coaxial rélatif à l'alésage de guidage (3), **caractérisé en ce que** le joint annulair (11) est arrangé aux diamètres périphériques (8, 9) des deux éléments de cloison (6, 7) du type coquille et annulaire et symmetrique rélatif à ces éléments de cloison (6, 7) du type coquille et annulaire.

2. Elément de découplage (1) selon revendication 1, **caractérisé en ce que** les éléments de cloison (6, 7) du type coquille et annulaire sont symmetrique rélatif au coussin métallique (5).

3. Elément de découplage (1) selon revendication 1, **caractérisé en ce que** le joint annulair (11) est en élastomère ou en plastique.

4. Elément de découplage (1) selon revendication 1, **caractérisé en ce que** les éléments de cloison (6, 7) du type coquille et annulaire sont en tole ou en plastique.

5. Elément de découplage (1) selon revendication 1, **caractérisé en ce que** l'injecteur de carburant (2) repose coaxialement à l'alésage de guidage sur le joint annulair (11).

6. Elément de découplage (1) selon revendication 1, **caractérisé en ce que** la culasse (4) repose coaxialement à l'alésage de guidage sur le joint annulair (11).

7. Elément de découplage (1) selon revendication 1, **caractérisé en ce que** le joint annulair (11) est serré radialement contre un mur de la culasse (4).

8. Elément de découplage (1) selon revendication 1, **caractérisé en ce que** l'injecteur repose sur le boucle supérieur (6) des éléments de cloison (6, 7) du type coquille et annulaire.

9. Elément de découplage (1) selon revendication 1, **caractérisé en ce que** le boucle inférieur (7) des éléments de cloison (6, 7) du type coquille et annulaire repose sur la culasse (4).

10. Elément de découplage (1) selon revendication 4, **caractérisé en ce qu'**au moins un des éléments de cloison (6, 7) du type coquille et annulaire est au moins partiellement enduit.

11. Elément de découplage (1) selon revendication 1, **caractérisé en ce que** des éléments de cloison (6, 7) du type coquille et annulaire le boucle supérieur (6) est ajusté avec un bout radialement à l'intérieur (12) et le boucle inférieur (7) avec un bout radialement à l'intérieur (13) à l'injecteur de carburant (2).

12. Elément de découplage (1) selon revendication 1, **caractérisé en ce que** des éléments de cloison (6, 7) du type coquille et annulaire le boucle supérieur (6) avec le bout radialement à l'intérieur (16) et le boucle inférieur (7) avec le bout radialement à l'intérieur (17) est libre de l'injecteur de carburant (2).
